# EUROPÄISCHE PATENTSCHRIFT

(11) **EP 1 850 014 B1**
(45) Veröffentlichungstag und Bekanntmachung des Hinweises auf die Patenterteilung: **23.12.2009**
(21) Anmeldenummer: 07005219.6
(22) Anmeldetag: 14.03.2007
(51) Int. Cl.: F04D 29/02, F04D 29/42, F04D 29/62, B29C 65/00, B29C 65/16

(54) **Kreiselpumpe**
Centrifugal pump
Pompe centrifuge

(30) Priorität: 28.04.2006 DE 102006021240
(43) Veröffentlichungstag der Anmeldung: 31.10.2007
(73) Patentinhaber: Bühler Motor GmbH, 90459 Nürnberg (DE)
(72) Erfinder: Ihle, Olai, 90542 Eckental (DE); Peterreins, Thomas, 90475 Nürnberg (DE); Schmidt, Helmut, 90765 Fürth (DE); Suttner-Reimann, Armin, 91126 Schwabach (DE)

(56) Entgegenhaltungen:
- WO-A-2005/052377
- WO-A-2007/111310
- DE-A1- 10 062 446
- DE-C1- 19 956 380
- DE-U1-202004 010 890

## Beschreibung

Die Erfindung betrifft eine Kreiselpumpe (100) mit einem aus spritzgusstechnisch verarbeitbarem Kunststoffmaterial bestehenden Pumpengehäuse (102), mit einem ersten Gehäuseteil (103), das mit einem Saugstutzen (105) und einem Druckstutzen (106) einstückig ist und einen Dichtungsbereich (133) aufweist, über den es flüssigkeitsdicht mit einem zweiten, einen Elektromotor (10) aufnehmendem Gehäuseteil (104) verbunden ist und einem Motorgehäuseteil (44).

Die DE 100 62 446 A1 beschreibt eine Pumpe bei der zwei einen Ansaugbereich bildenden Teile im Laserschweißverfahren verbunden sind. Dabei ist eines der Teile aus einem für die vorgesehene Wellenlänge des Laserlichts durchlässigen Kunststoff und das andere Teil aus einem für diese Wellenlänge undurchlässigen Kunststoff gefertigt. Die WO 2005/052377 A1 beschreibt einen Radiallüfter, bei dem aus Kunststoff bestehende Lüfterflügel durch ein Laser-Durchstrahlschweißverfahren an einer Scheibe befestigt sind. Aus der DE 20 2004 010 890 U1 ist ein Gehäuse eines Antriebsmotors bekannt, bei welchem eine Verschlussanordnung nach Art eines Deckels ausgebildet ist, welcher aus einem für Laserlicht zumindest partiell durchlässigen thermoplastischen Kunststoff ausgebildet ist, wobei dieser Deckel durch eine im wesentlichen flüssigkeitsdichte Schweißverbindung befesigt ist.

Aus der DE 199 56 380 C1 ist eine gattungsgemäße Kreiselpumpe bekannt, bei der ein Dichtring eingebracht werden muss um den flüssigkeitsdurchströmten Pumpenraum der Kreiselpumpe abzudichten. Für das Motorgehäuseteil ist keine Dichtung offenbart. Weiter sind Schrauben vorgesehen mit deren Hilfe die Gehäuseteile miteinander verbunden werden. Die bekannte Kreiselpumpe weist eine große Anzahl an Einzelteilen auf, die montiert werden müssen. Die Dichtheit des Motorgehäuses kann nur in begrenztem Umfang sichergestellt werden. Die Schraubverbindung zwischen den Gehäuseteilen verringert die Einsatzmöglichkeiten der Pumpe weil für jede Orientierung des Druckstutzens in Bezug auf die Pumpenbefestigungsmittel der Kreiselpumpe eine Gehäusevariante bevorratet werden muss.

Daher ist es Aufgabe der vorliegenden Erfindung eine Kreiselpumpe darzustellen, bei der eine sehr gute Dichtigkeit bei minimaler Teileanzahl, minimalem Gewicht und bei minimalem Montageaufwand bei universeller Einsetzbarkeit erreicht wird, ohne den optischen Gesamteindruck der Kreiselpumpe zu sehr zu beeinträchtigen.

Diese Aufgabe wird erfindungsgemäß dadurch gelöst, dass das zweite Gehäuseteil (104) aus einem für Laserlicht einer Wellenlänge oder eines Wellenlängenbereichs durchlässiges Material und das erste Gehäuseteil (103) aus einem dasselbe Laserlicht absorbierendem Material besteht und das erste Gehäuseteil (103) und das zweite Gehäuseteil (104) miteinander verschweißt sind, das Pumpengehäuse (102) ohne zusätzliche Dichtungsmaterialien flüssigkeitsdicht ist, das zweite Gehäuseteil (104) mit dem Motorgehäuseteil (44) verschweißt ist, wobei das Motorgehäuseteil (44) aus einem Material besteht, das dasselbe Laserlicht, für das das Material des zweiten Gehäuseteils (104) durchlässig ist, absorbieren kann, das erste Gehäuseteil (103) einen ersten Dichtungsbereich (133), dass das zweite Gehäuseteil (104) einen zweiten Dichtungsbereich (144) und dritten Dichtungsbereich (145) und dass das Motorgehäuse (44) einen vierten Dichtungsbereich (444) aufweist und dass der zweite Dichtungsbereich (144) und der dritte Dichtungsbereich (145) so nahe beieinander liegen, dass maximal 20% der sichtbaren Gesamtfläche von Kreiselpumpe (100) und Elektromotor (10) vom zweiten Gehäuseteil (104) eingenommen werden. Durch die Schweißverbindung wird sowohl ein Dichtungsteil als auch Befestigungsmittel, wie Schrauben eingespart, wodurch auch deren Montage, Gewicht und Lagerhaltung entfällt. Die Verwendung von teilweise transparentem Material erlaubt es die Schweißnaht an nahezu beliebiger und geschützter Stelle herzustellen. Da das zweite Gehäuseteil bei der gattungsgemäßen Pumpenbauart den geringsten Anteil an der sichtbaren Gehäusefläche ausmacht, wird dieses Gehäuseteil als laserlichtdurchlässiges Material ausgebildet, ist der optische Gesamteindruck nur unwesentlich beeinträchtigt. Die Farbe des für die Laserstrahlen transparenten Materials unterscheidet sich nämlich auch im sichtbaren Frequenzbereich deutlich von den üblicherweise schwarzen Gehäuseteilen. Da auch das Motorgehäuseteil mit dem zweiten Gehäuseteil verschweißt wird, wobei das Motorgehäuseteil (44) aus einem Material besteht, das dasselbe Laserlicht, für das das Material des zweiten Gehäuseteils (104) durchlässig ist, absorbieren kann, wird die Anzahl der zu verarbeitenden Kunststoffmaterialien minimiert. Durch die Verschweißung des Motorgehäuseteils, wird eine optimale Abdichtung von stromführenden Teilen erreicht. Um die gewünschte Dichtwirkung zu erreichen muss das erste Gehäuseteil (103) einen ersten Dichtungsbereich (133), das zweite Gehäuseteil (104) einen zweiten Dichtungsbereich (144) und dritten Dichtungsbereich (145) und das Motorgehäuseteil (44) einen vierten Dichtungsbereich (444) aufweisen. Es ist besonders vorteilhaft für den optischen Eindruck der Kreiselpumpe wenn der zweite Dichtungsbereich (144) und der dritte Dichtungsbereich (145) so nahe beieinander liegen, dass maximal 20% der sichtbaren Gesamtfläche von Kreiselpumpe (100) und Elektromotor (10) vom zweiten Gehäuseteil (104) eingenommen werden.

Weiterbildungen der Erfindung werden in den Unteransprüchen dargestellt. Gemäß einer besonders bevorzugten Ausführungsform der Kreiselpumpe wird vorgesehen, dass das erste Gehäuseteil (103) und das zweite Gehäuseteil (104) Verbindungsgeometrien aufweisen, mit deren Hilfe Kraftschluss oder Formschluss zwischen diesen Gehäuseteilen (103, 104) herstellbar ist. Diese Verbindung dient zum einen, für eine leichte Handhabung im Montageprozess. Auf diese Weise lässt sich auch die Vormontage von der Endmontage räumlich getrennt durchführen. Zum anderen wird eine gute Anlage der Verbindungsbereiche aneinander ermöglicht und damit die Qualität der Schweißverbindung verbessert.

Aus den gleichen Gründen könnten auch das zweite Gehäuseteil (104) und das Motorgehäuseteil (44) Verbindungsgeometrien aufweisen, mit deren Hilfe Kraftschluss oder Formschluss zwischen diesen Gehäuseteilen (104, 44) herstellbar ist.

Eine besonders einfach darstellbare Verbindungsgeometrie wird dadurch erreicht, dass die Verbindungsgeometrien zueinander komplementäre kegelige oder konische Flächen sind. Durch Keilwirkung wird hierbei eine gute kraftschlüssige Verbindung erreicht.

Sind der erste Dichtungsbereich (133) und der zweite Dichtungsbereich (144) Teil der kegeligen oder konischen Flächen, dann wird die erwähnte gute Anlage der zu verbindenden Teile miteinander erreicht. Das gleiche gilt, wenn der dritte Dichtungsbereich (145) und der vierte Dichtungsbereich (444) Teil der kegeligen oder konischen Flächen sind.

Es ist vorgesehen, dass das zweite Gehäuseteil (104) einstückig mit einem Spalttopf (116) ist, der einen Nassbereich der Kreiselpumpe von einem Trockenbereich trennt.

Vorzugsweise wird die Kreiselpumpe durch einen elektronisch kommutierten Gleichstrommotor angetrieben, in diesem Fall trägt das zweite Gehäuseteil (104) dessen Stator (40).

Das erste Gehäuseteil (103) weist einen ersten Ring (131) auf. An diesen Ring kann ein erster Flansch (130) des ersten Gehäuseteils (103) anschließen. Dabei stellt eine Ringaußenfläche des ersten Rings (131) vorzugsweise ein Bestandteil der Verbindungsgeometrien dar. Weiter ist vorgesehen, dass der erste Dichtungsbereich (133) am ersten Ring (131) angeordnet ist.

Das zweite Gehäuseteil (104) weist einen in seiner Grundform scheibenförmigen zweiten Flansch (140) auf. Am radial äußeren Rand des zweiten Flansches (140) kann ein zweiter Ring (141) anschließen. Dabei soll der zweite Flansch (140) und der zweite Ring (141) einen zweckmäßigen T-förmigen Querschnitt aufweisen. In diesem Fall können die durch den zweiten Flansch voneinander getrennten Ringinnenflächen Bestandteile der Verbindungsgeometrien darstellen. Der zweite und dritte Dichtungsbereich (144, 145) kann am zweiten Ring (141) angeordnet sein.

Das Motorgehäuseteil (44) weist einen dritten Ring (441) auf, wobei eine Ringaußenfläche des dritten Rings (441) ein Bestandteil der Verbindungsgeometrien darstellt. Es ist vorgesehen, dass der vierte Dichtungsbereich am dritten Ring (441) angeordnet ist.

Ein wichtiger Vorteil der erfindungsgemäßen Kreiselpumpe besteht in ihrer universellen Einsetzbarkeit. Diese lässt sich dadurch erreichen, dass nur am zweiten Gehäuseteil (104) Pumpenbefestigungsmittel (122) für die Befestigung der Kreiselpumpe (100) vorgesehen sind. Es ist auch möglich, dass am ersten und am zweiten Gehäuseteil (103, 104) Pumpenbefestigungsmittel (122) vorgesehen sind, wobei diese so ausgebildet sind, dass eine große Anzahl von Winkellagen zwischen dem ersten und dem Zweiten Gehäuseteil möglich sind. Im letzteren Fall kann jedoch keine stufenlose Wahl der Winkellage mehr erfolgen.

Als bevorzugtes Material für erste Gehäuseteil (103) und das Motorgehäuseteils (44) wird ein geschwärztes Material vorgeschlagen. Für das zweite Gehäuseteil (104) kann dann entsprechend ein naturbelassenes Material verwendet werden. Es handelt sich dabei jeweils um das gleiche Material mit unterschiedlichen Additiven.

Es ist wichtig, dass die formschlüssige oder die kraftschlüssige Verbindung zwischen dem ersten Gehäuseteil (103) und dem zweiten Gehäuseteil (104) jede beliebige Winkellage zwischen diesen beiden Gehäuseteilen (103, 104) zulässt. Als universelle formschlüssige Verbindung zwischen dem ersten und dem zweiten Gehäuseteil (103, 104) eignet sich besonders eine Ringschnappverbindung, bei dieser sind die zu verbindenden Teile nur axial festgelegt.

Ein besonders bevorzugtes Verfahren zur Herstellung einer Kreiselpumpe ist **dadurch gekennzeichnet, dass** das erste Gehäuseteil (103) mit dem zweiten Gehäuseteil (104) und das zweite Gehäuseteil (104) mit dem Motorgehäuse (44) in einem Arbeitsgang durch Laserdurchstrahlschweissen miteinander verbunden werden. Hierdurch kann die Durchlaufzeit minimiert werden, weil die beiden Dichtungen nicht nacheinander hergestellt werden müssen.

Ein Ausführungsbeispiel wird nachfolgend anhand der Zeichnung näher erläutert. Es zeigt:
Fig. 1 eine Schnittansicht durch eine erfindungsgemäße Kreiselpumpe
Fig. 2 einen vergrößerten Ausschnitt aus einem Verbindungsbereich eines Gehäuses der Kreiselpumpe und
Fig. 3 eine Explosionsdarstellung eines Gehäuses der Kreiselpumpe.

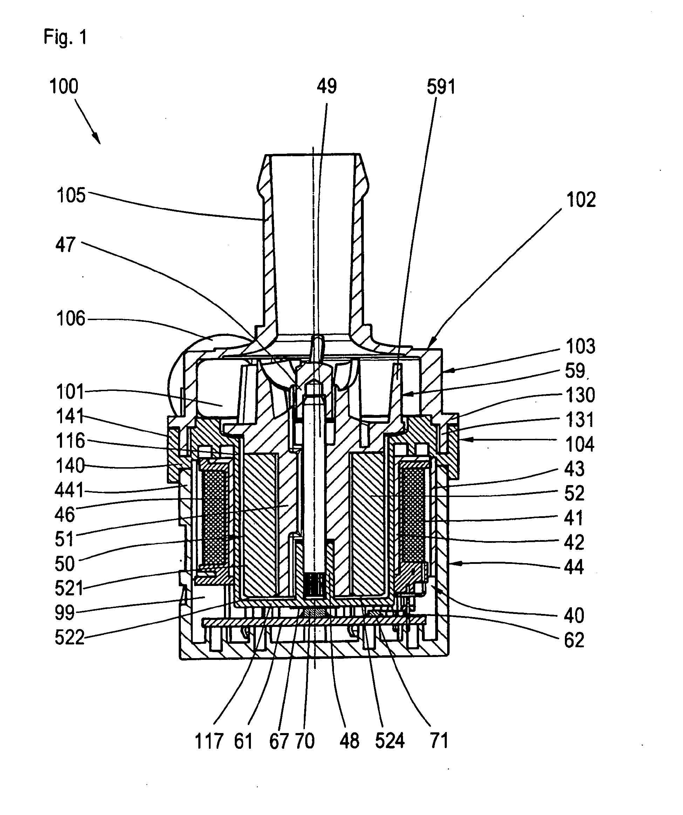

Fig. 1 zeigt eine Schnittansicht durch eine erfindungsgemäße Kreiselpumpe 100, mit einem Pumpengehäuse 102, bestehend aus einem ersten Gehäuseteil 103 und einem daran anschließenden zweiten Gehäuseteil 104. Ein Motorgehäuseteil 44 begrenzt einen Trockenraum, der von einem Stator (40) eines elektronisch kommutierten Gleichstrommotors und seiner Ansteuerelektronik ausgefüllt wird. Das Motorgehäuseteil 44 schließt an das zweite Gehäuseteil 102 and. Das erste und das zweite Gehäuseteil 103, 104 begrenzen einen Nassraum 101 der Kreiselpumpe. Das zweite Gehäuseteil 104 ist einstückig mit einem Spalttopf 116 geformt, welcher den Nassraum 101 von einem Trockenraum 99.

Der Nassraum 101 enthält eine Achse 49, die zwischen einer spalttopfseitigen Achsaufnahme 48 und einer saugstutzenseitigen Achsaufnahme 47 fest eingebaut ist. Eine Rändelung am Achsenende verhindert eine Verdrehung der Achse 49 während des Pumpenbetriebs. Auf der Achse 49 ist ein Festlager 54 drehbar gelagert, welches in einer hohlen Welle 51 des Rotors 50 eingepresst ist. Die Welle 51 ist einstückig mit einem Pumpenlaufrad 59, das mehrere etwa spiralförmig geformte Flügel 591 für die Flüssigkeitsförderung enthält. Die Stirnflächen des Festlagers 54 können sich axial unter Zwischenlage von Anlaufscheiben gegen die spalttopfseitige Achsaufnahme 48 und gegen die saugstutzenseitige Achsaufnahme 47 abstützen. Ein hohlzylindrischer Ferritmagnet 52 ist auf die hohle Welle 51 aufgeklebt, wobei ein elastischer Kleber verwendet wird, der in vier oder fünf in die Hohlwelle geformte achsparallele Nuten 511 eingebracht ist.

Der Trockenraum 99 enthält den Stator 40 des elektronisch kommutierten Gleichstrommotors 10, der in Form einer hohlzylindrischen Statorwicklung 41 ausgebildet ist, wobei deren Magnetfeld im Betrieb über Klauenpole in alternierende Weise an den Umfang des Spalttopfs 116 geführt wird und mit dem hohlzylindrsichen Permanentmagneten 52 im Nassraum 101 wechselwirkt. Der magnetische Kreis wird durch einen Rückschlussring 43, der mit den Klauenpolen 42 verbunden ist, geschlossen. Die Klauenpole 42 sind durch Umspritzen mit einem Isolierstoffkörper 46 versehen, der die Klauenpole 42 mechanisch aber nicht magnetisch miteinander verbindet. Der Stator 40 weist im vorliegenden Beispiel vier Polpaare auf. Der Isolierstoffkörper 46 ist geometrisch so geformt, dass die Wicklungsdrähte der Statorwicklung 41 mit Klemmschneidkontakte aufweisende Kontaktpins 62 verbindbar sind, wobei diese Klemmschneidkontakte im Isolierstoffkörper 46 mechanisch befestigbar sind. Die Kontaktpins 62 sind als Kombi-Kontakte geformt und an ihrem dem Klemmschneidkontakt 63 gegenüberliegenden Ende in eine Leiterplatte 61 eingepresst und dadurch mit dieser kontaktiert. Die Kontaktpins 62 enthalten hierfür ein oder zwei verformbare Einpresszonen. Die Leiterplatte 61 enthält einen Hall-Sensor 71, einen integrierten Schaltkreis 70 für die Beschaltung der Statorwicklung, einen PTC für den Wicklungsschutz und Steckerpins 64 für die Spannungsversorgung. Das Motorgehäuseteil 44 beinhaltet ein Steckergehäuse 65 in welchem die Steckerpins 64 angeordnet sind. Elektronische Bauteile mit großer Verlustwärme werden über Wärmeleitfolien 67 zum Nassraum 101 hin entwärmt. Leiterbahnen, die zur Kontaktierung von zu kühlenden Bauelementen dienen, sind so dimensioniert, dass zur leichteren Wärmeabfuhr möglichst breite Leiterbahnen 66 auf der Leiterplatte 61 vorgesehen sind. Um eine besonders gute Ausnutzung der Leiterplatte 61 und eine optimale Wärmeabfuhr zu erreichen, sind die unterschiedlichen Leiterbahnen 66 unterschiedlich breit ausgeführt, je nach dem wie viel Wärme in dem zu kontaktierenden Bauteileanschluss entsteht. In der Welle 51 ist eine Längsnut als Kühlkanal zwischen einem Boden 117 des Spalttopfs 116 und dem Pumpenlaufrad 59 eingeformt, der eine kontinuierliche Umwälzung des Fördermediums auch im Innenbereich des Spalttopfs 116 erzwingt. Die Leiterplatte ist zwischen einer Stirnseite 45 des Motorgehäuses 44 und dem Boden 117 des Spalttopfs 116 angeordnet und über die Wärmeleitfolie 67 in wärmeleitendem Kontakt mit dem Boden 117 gehalten.

Das erste Gehäuseteil 103 weist einen ersten Flansch 130 und einen ersten daran anschließenden Ring 131 auf. Das zweite Gehäuseteil 104 weist einen zweiten Flansch 140 und einen zweiten daran anschließenden Ring 141 auf. Das Motorgehäuseteil weist einen dritten Ring 441 auf. Der zweite Flansch 140 und der zweite Ring 141 bilden im Querschnitt zusammen eine T-Form. Es sind vier Dichtungsbereiche 133, 144, 145 und 444 vorgesehen. Der erste Dichtungsbereich befindet sich auf der radial außen liegenden Seite des ersten Rings 131 am ersten Gehäuseteil 103. Gegenüberliegend auf der radial innen liegenden Seite des zweiten Rings 141 und des zweiten Gehäuseteils 104 befindet sich der zweite Dichtungsbereich 144. Ebenfalls auf der radial innen liegenden Seite des zweiten Rings 141 und des zweiten Gehäuseteils 104 befindet sich der dritte Dichtungsbereich 145. Diesem gegenüberliegend auf der radial außen liegenden Seite des dritten Rings 441 und des Motorgehäuseteils 44 befindet sich der vierte Dichtungsbereich 444. Das zweite Gehäuseteil 104 besteht aus einem für Laserlicht einer Wellenlänge oder eines Wellenlängenbereichs durchlässiges Material. Das erste Gehäuseteil 103 und das Motorgehäuseteil 44 bestehen aus einem dasselbe Laserlicht absorbierendem Material. Dadurch lässt sich ein Laserstrahl ohne Erwärmung des transparenten Materials bis zu einer Nahtstelle führen. Dort trifft der Strahl auf Material, das das Licht absorbiert und in Wärme umwandelt, wodurch der Kunststoff aufschmilzt und eine innige Verbindung mit dem benachbarten Material eingeht.

Da die beiden zu verschweißenden Dichtungsbereiche nahe beieinander liegen ist es ohne Schwierigkeiten möglich die beiden Nähte in einer Vorrichtung und in einem Arbeitsgang herzustellen. Die Schweißvorrichtung kann zwei einzelne Laser aufweisen, wobei mit jeweils einem Laserstrahl eine Schweißnaht hergestellt wird oder sie kann einen einzigen Laser aufweisen, dessen Ausgangsstrahl durch einen Strahlteiler in zwei Strahlenbündel geteilt wird, von denen jeder eine der Schweißnähte erzeugt. Im vorliegenden Beispiel werden die Laserstrahlen radial auf das Pumpengehäuse gelenkt.

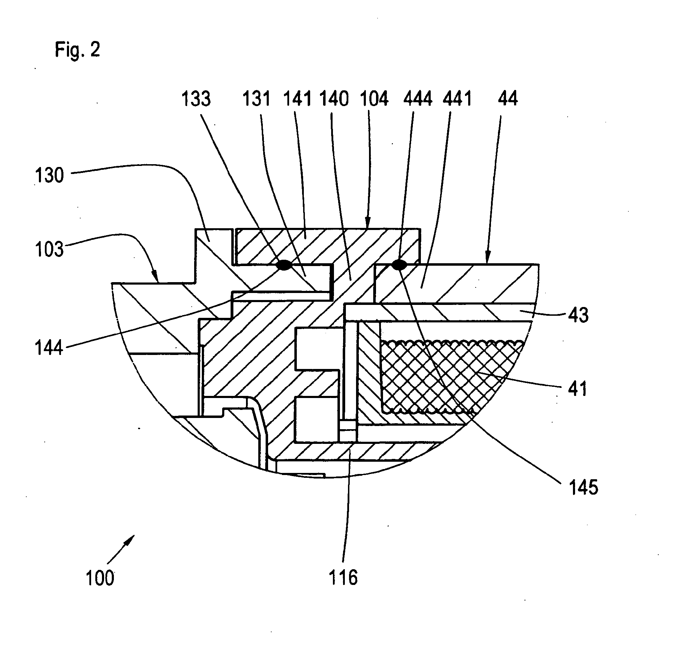

Fig. 2 zeigt einen vergrößerten Ausschnitt aus dem Verbindungsbereich des ersten Gehäuseteils 103 mit dem zweiten Gehäuseteil 104 und zwischen dem zweiten Gehäuseteil 104 und dem Motorgehäuseteil 44.

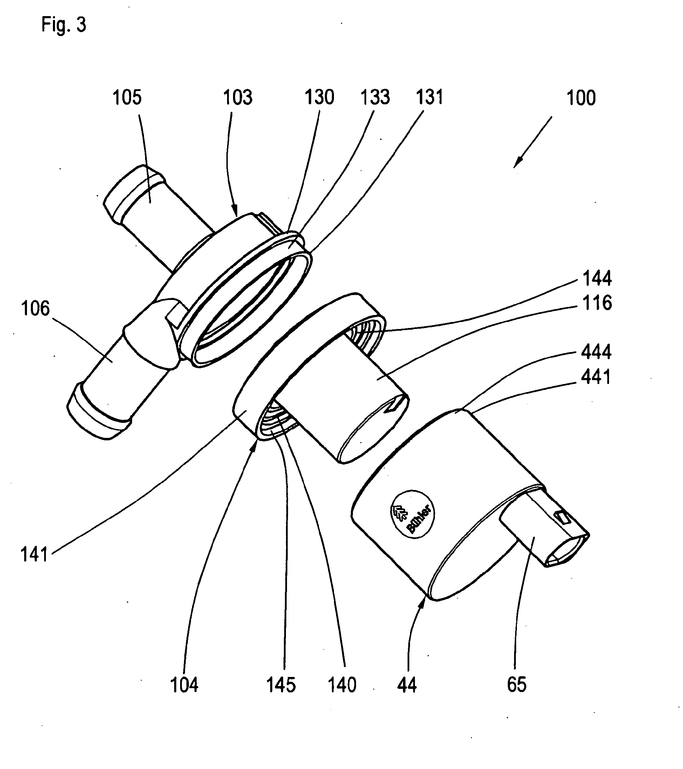

Fig. 3 zeigt eine Explosionsdarstellung des Gehäuses der Kreiselpume 100 mit dem ersten Gehäuseteil 103, dem zweiten Gehäuseteil 104 und dem Motorgehäuseteil 44. Das erste Gehäuseteil 103 weist einen Saugstutzen 105, einen Druckstutzen 106 auf.

In den Fig. 2 und 3 ist der erste Flansch 130 mit dem daran anschießenden ersten Ring 131 und dem ersten Dichtungsbereich 133, das zweite Gehäuseteil 104, das den Spalttopf 116 umfasst, der zweite Flansch 140 und der zweite Ring 141, der an seiner Innenseite den zweiten Dichtungsbereich 144 und den dritten Dichtungsbereich 145 aufweist und das Motorgehäuseteil 44, das den dritten Ring 441 und den vierten Dichtungsbereich 444 umfasst, ersichtlich. Der erste Ring 131 und der zweite Ring 141, sowie der zweite Ring 141 und der dritte Ring 441 sind so aufeinander abgestimmt, dass sie leicht kegelig ausgeführt sind, so dass sich nach dem axialen Fügen und vor dem Schweißen bereits eine kraftschlüssige Verbindung ergibt.

### Bezugszeichenliste

- 10: Elektromotor
- 40: Stator
- 41: Statorwicklung
- 42: Klauenpol
- 43: Rückschlussring
- 44: Motorgehäuse
- 45: Stirnseite (des Motorgehäuses)
- 46: Isolierstoffkörper
- 47: saugstutzenseitige Achsaufnahme
- 48: spalttopfseitige Achsaufnahme
- 49: Achse
- 50: Rotor
- 51: Welle
- 511: Nut
- 52: hohlzylindrischer Permanentmagnet
- 54: Festlager
- 59: Pumpenlaufrad
- 591: Flügel
- 61: Leiterplatte
- 62: Kontaktpin
- 63: Klemmschneidkontakt
- 64: Steckerpin
- 65: Steckergehäuse
- 66: Leiterbahn
- 67: Wärmeleitfolie
- 70: Integrierter Schaltkreis (lC)
- 71: Hall-Sensor
- 99: Trockenraum
- 100: Kreiselpumpe
- 101: Nassraum
- 102: Pumpengehäuse
- 103: erstes Gehäuseteil
- 104: zweites Gehäuseteil
- 105: Saugstutzen
- 106: Druckstutzen
- 116: Spalttopf
- 117: Boden
- 122: Pumpenbefestigungsmittel
- 130: erster Flansch
- 131: erster Ring
- 133: erster Dichtungsbereich
- 140: zweiter Flansch
- 141: zweiter Ring
- 144: zweiter Dichtungsbereich
- 145: dritter Dichtungsbereich
- 441: dritter Ring
- 444: vierter Dichtungsbereich

## Patentansprüche

1. Kreiselpumpe (100) mit einem aus spritzgusstechnisch verarbeitbarem Kunststoffmaterial bestehenden Pumpengehäuse (102), mit einem ersten Gehäuseteil (103), das mit einem Saugstutzen (105) und einem Druckstutzen (106) einstückig ist und einen Dichtungsbereich (133) aufweist, über den es flüssigkeitsdicht mit einem zweiten, einen Elektromotor (10) aufnehmendem Gehäuseteil (104) verbunden ist und einem Motorgehäuseteil (44), **dadurch gekennzeichnet, dass** das zweite Gehäuseteil (104) aus einem für Laserlicht einer Wellenlänge oder eines Wellenlängenbereichs durchlässiges Material und das erste Gehäuseteil (103) aus einem dasselbe Laserlicht absorbierendem Material besteht und das erste Gehäuseteil (103) und das zweite Gehäuseteil (104) miteinander verschweißt sind, das Pumpengehäuse (102) ohne zusätzliche Dichtungsmaterialien flüssigkeitsdicht ist, das zweite Gehäuseteil (104) mit dem Motorgehäuseteil (44) verschweißt ist, wobei das Motorgehäuseteil (44) aus einem Material besteht, das dasselbe Laserlicht, für das das Material des zweiten Gehäuseteils (104) durchlässig ist, absorbieren kann, das erste Gehäuseteil (103) einen ersten Dichtungsbereich (133), dass das zweite Gehäuseteil (104) einen zweiten Dichtungsbereich (144) und dritten Dichtungsbereich (145) und dass das Motorgehäuse (44) einen vierten Dichtungsbereich (444) aufweist und dass der zweite Dichtungsbereich (144) und der dritte Dichtungsbereich (145) so nahe beieinander liegen, dass maximal 20% der sichtbaren Gesamtfläche von Kreiselpumpe (100) und Elektromotor (10) vom zweiten Gehäuseteil (104) eingenommen werden.

2. Kreiselpumpe nach Anspruch 1, **dadurch gekennzeichnet, dass** das erste Gehäuseteil (103) und das zweite Gehäuseteil (104) Verbindungsgeometrien aufweisen, mit deren Hilfe Kraftschluss oder Formschluss zwischen diesen Gehäuseteilen (103, 104) herstellbar ist.

3. Kreiselpumpe nach zumindest einem der vorangehenden Ansprüche, **dadurch gekennzeichnet, dass** das zweite Gehäuseteil (104) und das Motorgehäuseteil (44) Verbindungsgeometrien aufweisen, mit deren Hilfe Kraftschluss oder Formschluss zwischen diesen Gehäuseteilen (104, 44) herstellbar ist.

4. Kreiselpumpe nach Anspruch 2 oder 3, **dadurch gekennzeichnet, dass** die Verbindungsgeometrien zueinander komplementäre kegelige oder konische Flächen sind.

5. Kreiselpumpe nach Anspruch 4, **dadurch gekennzeichnet, dass** der erste Dichtungsbereich (133) und der zweite Dichtungsbereich (144) Teil der kegeligen oder konischen Flächen sind.

6. Kreiselpumpe nach Anspruch 4, **dadurch gekennzeichnet, dass** der dritte Dichtungsbereich (145) und der vierte Dichtungsbereich (444) Teil der kegeligen oder konischen Flächen sind.

7. Kreiselpumpe nach zumindest einem der vorangehenden Ansprüche, **dadurch gekennzeichnet, dass** das zweite Gehäuseteil (104) einstückig mit einem Spalttopf (116) ist, der einen Nassbereich der Kreiselpumpe von einem Trockenbereich trennt.

8. Kreiselpumpe nach Anspruch 7, **dadurch gekennzeichnet, dass** das zweite Gehäuseteil (104) einen Stator (40) eines elektronisch kommutierten Gleichstrommotors trägt.

9. Kreiselpumpe nach zumindest einem der vorangehenden Ansprüche, **dadurch gekennzeichnet, dass** das erste Gehäuseteil (103) einen ersten Ring (131) aufweist.

10. Kreiselpumpe nach Anspruch 9, **dadurch gekennzeichnet, dass** der erste Ring (131) an einen ersten Flansch (130) des ersten Gehäuseteils (103) anschließt

11. Kreiselpumpe nach Anspruch 9 oder 10, **dadurch gekennzeichnet, dass** eine Ringaußenfläche des ersten Rings (131) ein Bestandteil der Verbindungsgeometrien darstellt.

12. Kreiselpumpe nach Anspruch 10 oder 11, **dadurch gekennzeichnet, dass** der erste Dichtungsbereich (133) am ersten Ring (131) angeordnet ist.

13. Kreiselpumpe nach Anspruch 7 oder 8, **dadurch gekennzeichnet, dass** das zweite Gehäuseteil (104) einen in seiner Grundform scheibenförmigen zweiten Flansch (140) aufweist.

14. Kreiselpumpe nach Anspruch 13, **dadurch gekennzeichnet, dass** am radial äußeren Rand des zweiten Flansches (140) ein zweiter Ring (141) anschließt.

15. Kreiselpumpe nach Anspruch 14, **dadurch gekennzeichnet, dass** der zweite Flansch (140) und der zweite Ring (141) einen T-förmigen Querschnitt aufweisen.

16. Kreiselpumpe nach Anspruch 15, **dadurch gekennzeichnet, dass** die durch den zweiten Flansch voneinander getrennten Ringinnenflächen Bestandteile der Verbindungsgeometrien darstellen.

17. Kreiselpumpe nach Anspruch 14, 15 oder 16, **dadurch gekennzeichnet, dass** der zweite und dritte Dichtungsbereich (144, 145) am zweiten Ring (141) angeordnet ist.

18. Kreiselpumpe nach zumindest einem der vorangehenden Ansprüche, **dadurch gekennzeichnet, dass** das Motorgehäuseteil (44) einen dritten Ring (441) aufweist.

19. Kreiselpumpe nach Anspruch 18, **dadurch gekennzeichnet, dass** eine Ringaußenfläche des dritten Rings (441) ein Bestandteil der Verbindungsgeometrien darstellt.

20. Kreiselpumpe nach Anspruch 18 oder 19, **dadurch gekennzeichnet, dass** der vierte Dichtungsbereich (444) am dritten Ring (441) angeordnet ist.

21. Kreiselpumpe nach zumindest einem der vorangehenden Ansprüche, **dadurch gekennzeichnet, dass** nur am zweiten Gehäuseteil (104) Pumpenbefestigungsmittel (122) für die Befestigung der Kreiselpumpe (100) vorgesehen sind.

22. Kreiselpumpe nach zumindest einem der vorangehenden Ansprüche, **dadurch gekennzeichnet, dass** am ersten und am zweiten Gehäuseteil (103, 104) Pumpenbefestigungsmittel (122) vorgesehen sind, wobei diese so ausgebildet sind, dass eine große Anzahl von Winkellagen in Bezug auf die Pumpenachse zwischen dem ersten und dem Zweiten Gehäuseteil möglich sind.

23. Kreiselpumpe nach zumindest einem der vorangehenden Ansprüche, **dadurch gekennzeichnet, dass** das Material des ersten Gehäuseteils (103) und des Motorgehäuseteils (44) geschwärzt ist und das Material des zweiten Gehäuseteils (104) naturbelassen ist.

24. Kreiselpumpe nach einem der Ansprüche 2 bis 21 und 23, **dadurch gekennzeichnet, dass** die formschlüssige oder die kraftschlüssige Verbindung zwischen dem ersten Gehäuseteil (103) und dem zweiten Gehäuseteil (104) jede beliebige Winkellage in Bezug auf die Pumpenachse zwischen diesen beiden Gehäuseteilen (103, 104) zulässt.

25. Kreiselpumpe nach Anspruch 24, **dadurch gekenntzeichnet dass** das erste Gehäuseteil und das zweite Gehäuseteil (103, 104) mittels einer Ringschnappverbindung miteinander verbunden sind.

26. Verfahren zur Herstellung einer Kreiselpumpe nach zumindest einem der vorangehenden Ansprüche, **dadurch gekennzeichnet, dass** das erste Gehäuseteil (103) mit dem zweiten Gehäuseteil (104) und das zweite Gehäuseteil (104) mit dem Motorgehäuse (44) in einem Arbeitsgang durch Laserdurchstrahlschweissen miteinander verbunden werden.

## Claims

1. A centrifugal pump (100) having a pump housing (102), consisting of an injection-mouldable plastics material and having a first housing part (103) which is integral with a suction connection (105) and a pressure connection (106) and which has a sealing region (133) via which it is in a fluid-tight connection with a second housing part (104) receiving an electric motor (10), and a motor housing part (44), **characterised in that** the second housing part (104) is composed of a material permeable to laser light of one wave length or of a wave length range and the first housing part (103) is composed of a material absorbing the same laser light and the first housing part (103) and the second housing part (104) are welded together, the pump housing (102) is fluid-tight without additional sealing materials, the second housing part (104) is welded to the motor housing part (44), wherein the motor housing part (44) is composed of a material which can absorb the same laser light to which the material of the second housing part (104) is permeable, **in that** the first housing part (103) has a first sealing region (133), **in that** the second housing part (104) has a second sealing region (144) and third sealing region (145), and **in that** the motor housing (44) has a fourth sealing region (444), and **in that** the second sealing region (144) and the third sealing region (145) lie so close together that at most 20% of the visible total area of the centrifugal pump (100) and the electric motor (10) is received by the second housing part (104).

2. A centrifugal pump according to claim 1, **characterised in that** the first housing part (103) and the second housing part (104) have connection geometries by means of which a non-positive connection or a positive connection between these housing parts (103, 104) can be produced.

3. A centrifugal pump according to at least one of the preceding claims, **characterised in that** the second housing part (104) and the motor housing part (44) have connection geometries by means of which a non-positive connection or a positive connection between these housing parts (104, 44) can be produced.

4. A centrifugal pump according to claim 2 or 3, **characterised in that** the connection geometries are complementary tapered or conical surfaces.

5. A centrifugal pump according to claim 4, **characterised in that** the first sealing region (133) and the second sealing region (144) are part of the tapered or conical surfaces.

6. A centrifugal pump according to claim 4, **characterised in that** the third sealing region (145) and the fourth sealing region (444) are part of the tapered or conical surfaces.

7. A centrifugal pump according to at least one of the preceding claims, **characterised in that** the second housing part (104) is integral with a split pot (116) separating a wet region of the centrifugal pump from a dry region.

8. A centrifugal pump according to claim 7, **characterised in that** the second housing part (104) bears a stator (40) of an electronically commutated d.c. motor.

9. A centrifugal pump according to at least one of the preceding claims, **characterised in that** the first housing part (103) has a first ring (131).

10. A centrifugal pump according to claim 9, **characterised in that** the first ring (131) is attached to a first flange (130) of the first housing part (103).

11. A centrifugal pump according to claim 9 or 10, **characterised in that** a ring outer surface of the first ring (131) constitutes an element of the connection geometries.

12. A centrifugal pump according to claim 10 or 11, **characterised in that** the first sealing region (133) is arranged on the first ring (131).

13. A centrifugal pump according to claim 7 or 8, **characterised in that** the second housing part (104) has a second flange (140) whose basic shape is discoidal.

14. A centrifugal pump according to claim 13, **characterised in that** a second ring (141) is attached to the radially outer edge of the second flange (140).

15. A centrifugal pump according to claim 14, **characterised in that** the second flange (140) and the second ring (141) have a T-shaped cross-section.

16. A centrifugal pump according to claim 15, **characterised in that** the ring inner surfaces separated from one another by the second flange constitute elements of the connection geometries.

17. A centrifugal pump according to claim 14, 15 or 16, **characterised in that** the second and third sealing regions (144, 145) are arranged on the second ring (141).

18. A centrifugal pump according to at least one of the preceding claims, **characterised in that** the motor housing part (44) has a third ring (441).

19. A centrifugal pump according to claim 18, **characterised in that** a ring outer surface of the third ring (441) constitutes an element of the connection geometries.

20. A centrifugal pump according to claim 18 or 19, **characterised in that** the fourth sealing region (444) is arranged on the third ring (441).

21. A centrifugal pump according to at least one of the preceding claims, **characterised in that** pump securing means (122) to secure the centrifugal pump (100) are provided on the second housing part (104) only.

22. A centrifugal pump according to at least one of the preceding claims, **characterised in that** pump securing means (122) are provided on the first and second housing parts (103, 104), wherein these securing means are formed such that a large number of angular positions in relation to the pump axis are possible between the first housing part and the second housing part.

23. A centrifugal pump according to at least one of the preceding claims, **characterised in that** the material of the first housing part (103) and the motor housing part (44) is blackened and the material of the second housing part (104) is in its natural state.

24. A centrifugal pump according to any one of claims 2 to 21 and 23, **characterised in that** the positive locking or non-positive locking connection between the first housing part (103) and the second housing part (104) permits any angular position in relation to the pump axis between these two housing parts (103, 104).

25. A centrifugal pump according to claim 24, **characterised in that** the first housing part and the second housing part (103, 104) are connected to one another by means of an annular snap-action connection.

26. A method of producing a centrifugal pump according to at least one of the preceding claims, **characterised in that** the first housing part (103) is connected to the second housing part (104) and the second housing part (104) to the motor housing (44) in one operation using laser beam welding.

## Revendications

1. Pompe centrifuge (100) avec un carter de pompe (102) en une matière plastique susceptible d'être transformée par une technique de moulage par injection, comprenant une première partie de carter (103), qui est réalisée d'un seul tenant avec un embout d'aspiration (105) et un embout de refoulement (106) et présente une zone d'étanchéité (133) par l'intermédiaire de laquelle elle est reliée, de manière étanche aux liquides, à une deuxième partie de carter (104) recevant un moteur électrique (10), et comprenant également une partie de carter de moteur (44),
**caractérisée en ce que** la deuxième partie de carter (104) est constituée d'un matériau transparent ou perméable à une lumière laser d'une longueur d'onde ou d'une plage de longueur d'onde donnée, et la première partie de carter (103) est formée d'un matériau absorbant la même lumière laser, et la première partie de carter (103) et la deuxième partie de carter (104) sont soudées l'une à l'autre, **en ce que** le carter de pompe (102) est étanche aux liquides sans matériaux d'étanchéité supplémentaires, et la deuxième partie de carter (104) est soudée à la partie de carter de moteur (44), la partie de carter de moteur (44) étant constituée d'un matériau qui peut absorber la même lumière laser que celle pour laquelle le matériau de la deuxième partie de carter (104) est perméable, **en ce que** la première partie de carter (103) présente une première zone d'étanchéité (133), la deuxième partie de carter (104) une deuxième zone d'étanchéité (144) et une troisième zone d'étanchéité (145), et la partie de carter de moteur (44) une quatrième zone d'étanchéité (444), et **en ce que** la deuxième zone d'étanchéité (144) et la troisième zone d'étanchéité (145) sont placées suffisamment proches l'une de l'autre pour qu'au maximum 20% de la surface totale de la pompe centrifuge (100) et du moteur électrique (10) soit occupée par la deuxième partie de carter (104).

2. Pompe centrifuge selon la revendication 1,
**caractérisée en ce que** la première partie de carter (103) et la deuxième partie de carter (104) présentent des géométries de liaison ou d'assemblage à l'aide desquelles peut être établie une liaison par adhérence ou une liaison par complémentarité de formes entre ces parties de carter (103, 104).

3. Pompe centrifuge selon l'une au moins des revendications précédentes, **caractérisée en ce que** la deuxième partie de carter (104) et la partie de carter de moteur (44) présentent des géométries de liaison ou d'assemblage à l'aide desquelles peut être établie une liaison par adhérence ou une liaison par complémentarité de formes entre ces parties de carter (104, 44).

4. Pompe centrifuge selon la revendication 2 ou la revendication 3, **caractérisée en ce que** les géométries de liaison ou d'assemblage sont des surfaces coniques ou effilées en cône, mutuellement complémentaires.

5. Pompe centrifuge selon la revendication 4,
**caractérisée en ce que** la première zone d'étanchéité (133) et la deuxième zone d'étanchéité (144) font partie des surfaces coniques ou effilées en cône.

6. Pompe centrifuge selon la revendication 4,
**caractérisée en ce que** la troisième zone d'étanchéité (145) et la quatrième zone d'étanchéité (444) font partie des surfaces coniques ou effilées en cône.

7. Pompe centrifuge selon l'une au moins des revendications précédentes, **caractérisée en ce que** la deuxième partie de carter (104) est réalisée d'un seul tenant avec une gaine séparatrice en forme de pot (116), qui sépare une zone humide de la pompe centrifuge d'une zone sèche.

8. Pompe centrifuge selon la revendication 7,
**caractérisée en ce que** la deuxième partie de carter (104) porte un stator (40) d'un moteur à courant continu commuté électroniquement.

9. Pompe centrifuge selon l'une au moins des revendications précédentes, **caractérisée en ce que** la première partie de carter (103) présente un premier anneau (131).

10. Pompe centrifuge selon la revendication 9,
**caractérisée en ce que** le premier anneau (131) se raccorde à un premier flasque (130) de la première partie de carter (103).

11. Pompe centrifuge selon la revendication 9 ou la revendication 10, **caractérisée en ce qu'**une surface extérieure d'anneau du premier anneau (131) représente une partie intégrante des géométries de liaison.

12. Pompe centrifuge selon la revendication 10 ou la revendication 11, **caractérisée en ce que** la première zone d'étanchéité (133) est agencée sur le premier anneau (131).

13. Pompe centrifuge selon la revendication 7 ou la revendication 8, **caractérisée en ce que** la deuxième partie de carter (104) présente un deuxième flasque (140) dont la forme de base est en forme de disque ou de rondelle.

14. Pompe centrifuge selon la revendication 13,
**caractérisée en ce qu'**au bord radialement extérieur du deuxième flasque (140), se raccorde un deuxième anneau (141).

15. Pompe centrifuge selon la revendication 14,
**caractérisée en ce que** le deuxième flasque (140) et le deuxième anneau (141) présentent une forme de T en section transversale.

16. Pompe centrifuge selon la revendication 15,
**caractérisée en ce que** les surfaces intérieures d'anneau séparées par le deuxième flasque, représentent une partie intégrante des géométries de liaison.

17. Pompe centrifuge selon les revendications 14, 15 ou 16, **caractérisée en ce que** la deuxième et la troisième zone d'étanchéité (144, 145) sont agencées sur le deuxième anneau (141).

18. Pompe centrifuge selon l'une au moins des revendications précédentes, **caractérisée en ce que** la partie de carter de moteur (44) présente un troisième anneau (441).

19. Pompe centrifuge selon la revendication 18,
**caractérisée en ce qu'**une surface extérieure d'anneau du troisième anneau (441) représente une partie intégrante des géométries de liaison.

20. Pompe centrifuge selon la revendication 18 ou 19,
**caractérisée en ce que** la quatrième zone d'étanchéité (444) est agencée sur le troisième anneau (441).

21. Pompe centrifuge selon l'une au moins des revendications précédentes, **caractérisée en ce que** des moyens de fixation de pompe (122) pour la fixation de la pompe centrifuge (100), sont prévus uniquement sur la deuxième partie de carter (104).

22. Pompe centrifuge selon l'une au moins des revendications précédentes, **caractérisée en ce que** des moyens de fixation de pompe (122) sont prévus sur la première et la deuxième partie de carter (103, 104), ces moyens de fixation étant conçus de manière à permettre un grand nombre de positions angulaires, relativement à l'axe de la pompe, entre la première et la deuxième partie de carter.

23. Pompe centrifuge selon l'une au moins des revendications précédentes, **caractérisée en ce que** le matériau de la première partie de carter (103) et de la partie de carter de moteur (44) est noirci, et le matériau de la deuxième partie de carter (104) est laissé nature.

24. Pompe centrifuge selon l'une des revendications 2 à 21 et 23, **caractérisée en ce que** l'assemblage ou la liaison par adhérence ou complémentarité de formes entre la première partie de carter (103) et la deuxième partie de carter (104) autorise toute position angulaire quelconque, relativement à l'axe de la pompe, entre ces deux parties de carter (103, 104).

25. Pompe centrifuge selon la revendication 24,
**caractérisée en ce que** la première et la deuxième partie de carter (103, 104) sont assemblées ou reliées l'une à l'autre au moyen d'une liaison par encliquetage annulaire.

26. Procédé de fabrication d'une pompe centrifuge selon l'une au moins des revendications précédentes, **caractérisé en ce que** la première partie de carter (103) est assemblée ou reliée à la deuxième partie de carter (104), et la deuxième partie de carter (104) à la partie de carter de moteur (44), par soudage par rayonnement laser pénétrant, au cours d'une seule opération de travail.
